(19) Europäisches Patentamt
European Patent Office
Office européen des brevets

(11) EP 2 712 208 A1

(12) EUROPEAN PATENT APPLICATION
published in accordance with Art. 153(4) EPC

(43) Date of publication:
26.03.2014 Bulletin 2014/13

(51) Int Cl.:
H04R 3/02 (2006.01)  H04B 3/23 (2006.01)
H04M 1/60 (2006.01)  H04R 1/40 (2006.01)
H04R 3/00 (2006.01)

(21) Application number: 12786011.2

(22) Date of filing: 18.05.2012

(86) International application number:
PCT/JP2012/063399

(87) International publication number:
WO 2012/157783 (22.11.2012 Gazette 2012/47)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 19.05.2011 JP 2011112076

(71) Applicant: NEC Corporation
Tokyo 108-8001 (JP)

(72) Inventor: HOUSHUYAMA, Osamu
Tokyo 108-8001 (JP)

(74) Representative: Betten & Resch
Theatinerstrasse 8
80333 München (DE)

(54) **AUDIO PROCESSING DEVICE, AUDIO PROCESSING METHOD, AND RECORDING MEDIUM ON WHICH AUDIO PROCESSING PROGRAM IS RECORDED**

(57) The present invention provides a device which suppresses a non-linear echo component without degradation of a desired audio component even when the large non-linear echo component is mixed in an audio input signal. The device includes audio output means, first audio input means, second audio input means that are disposed in a position closer to the audio output means than the first audio input means, means for outputting a combined signal of which audio signals from the first and second audio input means are combined so as forming directivity in which sensitivity in a direction of the audio output means is low when viewed from the first and second audio input means, means for generating artificial echo corresponding to an echo component mixed in the audio inputted to the first audio input means, and means for performing an echo suppression process to the combined signal by using the artificial echo.

Fig.1

**Description**

TECHNICAL FIELD

The present invention relates to a technology which suppresses echo in audio.

BACKGROUND ART

In the above-mentioned technical field, as shown in patent document 1, a technology to suppress echo is known. The technology is a one which generates an artificial linear echo signal from an audio output signal (far-end signal) by using an adaptive filter, suppresses a linear echo component in an audio input signal, and further, suppresses a non-linear echo component. In particular, it estimates a non-linear echo mixed in the audio input signal by using the artificial linear echo signal. Thus, the above technology permits relatively clearly extracting a desired audio signal from the audio input signal.

[Patent document]

[Patent document 1] International Publication WO 09-051197

SUMMARY OF THE INVENTION

[PROBLEM TO BE SOLVED BY THE INVENTION

However, when a large non-linear echo component is mixed in the audio input signal, the technology described in patent document 1 cannot suppress the non-linear echo component without degradation of a desired audio component.
The reason is because an echo suppression device described in patent document 1 calculates a crosstalk coefficient based on a signal including the non-linear echo component when the large non-linear echo component is included in the audio input signal.
An object of the present invention is to provide a technology to solve the above-mentioned problem.

[MEANS FOR SOLVING A PROBLEM]

A device according to one aspect of the present invention includes:

audio output means for outputting audio based on an audio output signal,
first audio input means for inputting audio,
second audio input means for inputting audio that are disposed in a position closer to the audio output means than the first audio input means,
directivity formation means for combining a first audio input signal outputted from the first audio input means and a second audio input signal from the second audio input means so as to form directivity in which sensitivity in a direction of the audio output means is low when viewed from the first audio input means and the second audio input means, and outputting a combined signal,
artificial echo generation means for generating artificial echo corresponding to an echo component mixed in the audio that is inputted to the first audio input means from the audio output means, and
echo suppression means for performing an echo suppression process to the combined signal outputted from the directivity formation means by using the artificial echo derived from the audio output signal.

A method according to one aspect of the present invention includes the steps of:

combining a first audio input signal outputted from first audio input means and a second audio input signal from second audio input means so as to form directivity in which sensitivity in a direction of audio output means is low when viewed from the first audio input means for inputting audio and the second audio input means for inputting audio that are disposed in a position closer to the audio output means for outputting the audio based on an audio output signal than the first audio input means, and outputting a combined signal,
generating artificial echo corresponding to an echo component mixed in the audio inputted to the first audio input means from the audio output means from the audio output signal, and

performing an echo suppression process to the combined signal by using the artificial echo derived from the audio output signal.

A non-volatile medium according to one aspect of the present invention recording a program causing a computer to perform:

a process in which a first audio input signal outputted from first audio input means and a second audio input signal from second audio input means are combined so as to form directivity in which sensitivity in a direction of audio output means is low when viewed from the first audio input means for inputting audio and the second audio input means that are disposed in a position closer to the audio output means for outputting the audio based on an audio output signal than the first audio input means, and a combined signal is outputted,
a process in which artificial echo corresponding to an echo component mixed in the audio inputted to the first audio input means from the audio output means is generated from the audio output signal, and
a process in which an echo suppression process is performed to the combined signal by using the artificial echo derived from the audio output signal.

[EFFECT OF THE INVENTION]

By using the present invention, even when the large non-linear echo component is mixed in the audio input signal, it is possible to suppress the non-linear echo component without degradation of the desired audio component mixed in the audio input signal.

BRIEF DESCRIPTION OF THE DRAWINGS

Fig. 1 is a block diagram showing a configuration of an audio processing device according to a first exemplary embodiment of the present invention.
Fig. 2 is a figure illustrating an effect of an audio processing device according to a second exemplary embodiment of the present invention.
Fig. 3 is a figure illustrating a configuration of an audio processing device according to the second exemplary embodiment of the present invention.
Fig. 4 is a figure illustrating a configuration of a non-linear echo suppression section according to the second exemplary embodiment of the present invention.
Fig. 5 is a figure illustrating an effect of an audio processing device according to a third exemplary embodiment of the present invention.
Fig. 6 is a figure illustrating a configuration of an audio processing device according to the third exemplary embodiment of the present invention.
Fig. 7 is a figure illustrating a configuration of an audio processing device according to a fourth exemplary embodiment of the present invention.
Fig. 8 is a figure illustrating a configuration of an audio processing device according to a fifth exemplary embodiment of the present invention.
Fig. 9 is a figure illustrating a configuration of an audio processing device according to the sixth exemplary embodiment of the present invention.
Fig. 10 is a figure illustrating a configuration of an audio processing device according to a seventh exemplary embodiment of the present invention.
Fig. 11 is a figure illustrating a configuration of an audio processing device according to an eighth exemplary embodiment of the present invention.
Fig. 12 is a figure illustrating a configuration of an audio processing device according to a ninth exemplary embodiment of the present invention.
Fig. 13 is a figure illustrating a configuration of an audio processing device according to another exemplary embodiment of the present invention.
Fig. 14 is a figure showing a recording medium recording a program of the present invention.

EXEMPLARY EMBODIMENTS FOR CARRYING OUT OF THE INVENTION

The exemplary embodiment of the present invention will be exemplarily described in detail below with reference to the drawings. However, the component described in the following exemplary embodiment is shown as an example.

Therefore, a technical scope of the present invention is not limited to those descriptions.

(First exemplary embodiment)

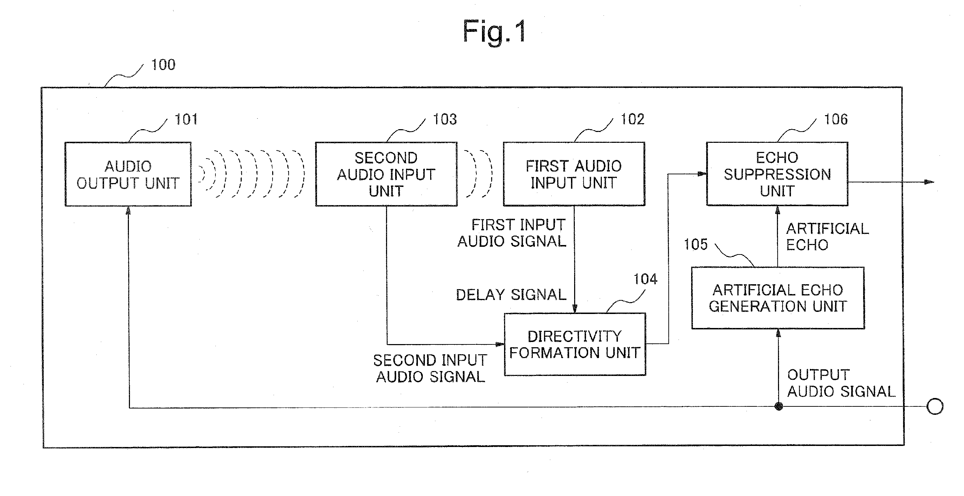

An audio processing device 100 according to a first exemplary embodiment of the present invention will be described by using Fig. 1. As shown in Fig. 1, the audio processing device 100 includes an audio output unit 101, a first audio input unit 102, a second audio input unit 103, a directivity formation unit 104, an artificial echo generation unit 105, and an echo suppression unit 106.

The audio output unit 101 outputs audio based on an audio output signal. The first audio input unit 102 inputs audio. The second audio input unit 103 is disposed in a position closer to the audio output unit 101 than the first audio input unit 102 and inputs audio. The directivity formation unit 104 combines a first audio input signal outputted from the first audio input unit 102 and a second audio input signal from the second audio input unit 103. Whereby, the directivity formation unit 104 forms directivity in which sensitivity in the direction of the audio output unit 101 is low when viewed from the first audio input unit 102 and the second audio input unit 103.

On the other hand, the artificial echo generation unit 105 generates an artificial echo, corresponding to an echo component mixed in first input audio, from the audio output signal. Here, the first input audio is such one that is inputted to the first audio input unit 102 from the audio output unit 101 which is as a factor. Further, the echo suppression unit 106 performs an echo suppression process to the output from the directivity formation unit 104 by using the artificial echo.

By using the above-mentioned configuration, even when a large non-linear echo component is mixed in the audio input signal, it is possible to suppress the non-linear echo component without degradation of a desired audio component mixed in the audio input signal.

The reason is because the audio processing device 100 has the following configuration. First, the directivity formation unit 104 forms directivity in which sensitivity in the direction of the audio output unit 101 is low when viewed from the first audio input unit 102 and the second audio input unit 103. Secondly, the artificial echo generation unit 105 generates the artificial echo corresponding to the echo component mixed in the first input audio from the audio output signal. Thirdly, the echo suppression unit 106 performs the echo suppression process to the output from the directivity formation unit 104 by using the artificial echo.

(Second exemplary embodiment)

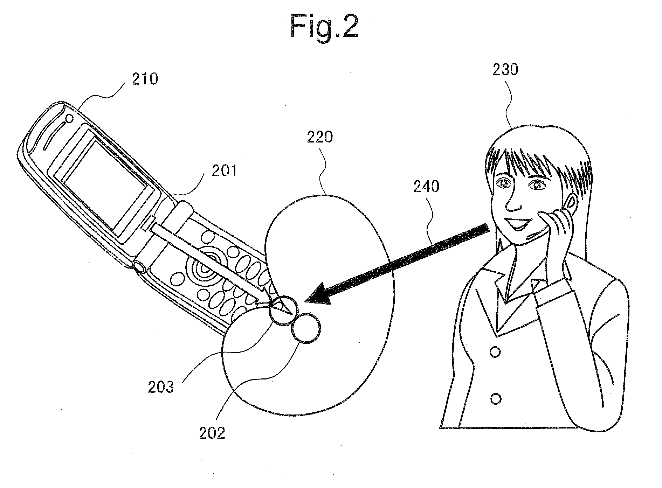

An audio processing device according to a second exemplary embodiment of the present invention will be described by using Fig. 2 to Fig. 4.

The audio processing device according to this exemplary embodiment is installed in a portable phone 210, a speaker 201 for hands-free communication outputs audio, and two microphones 202 and 203 that are disposed at the positions whose distances from the speaker 201 are different perform inputting audio.

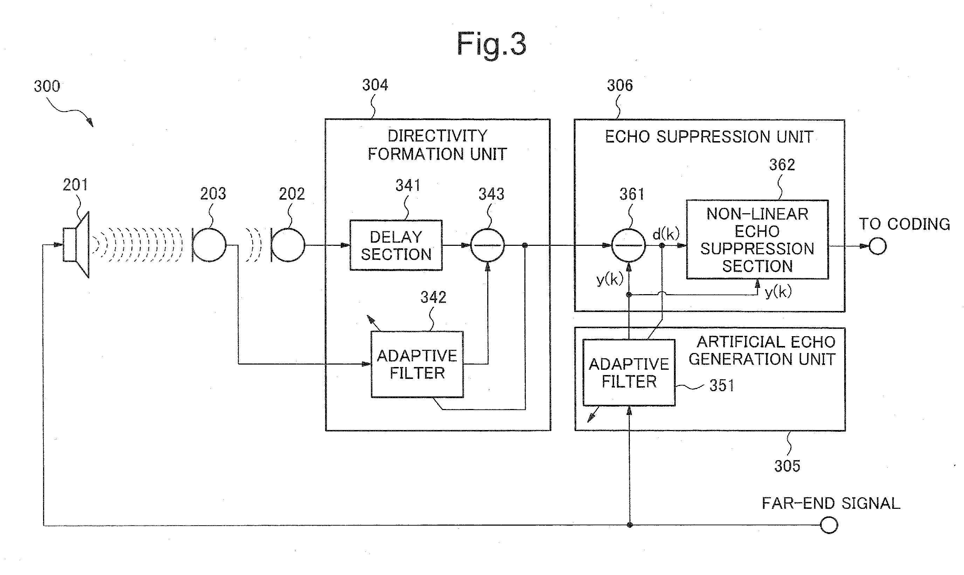

The audio processing device according to this exemplary embodiment forms directivity in which sensitivity in the direction of the speaker 201 is low when viewed from two microphones 202 and 203 by an internal process explained by using Fig. 3 and successive figures. In other words, the audio processing device according to this exemplary embodiment forms directivity in which a null point faces to the direction of the speaker 201.

As a result, it is possible to suppress echo components that are leaked from the speaker 201 to the microphones 202 and 203 without degrading a near-end audio 240 that is a speaking voice of a user 230.

«Entire configuration»

Fig. 3 is a configuration diagram of an audio processing device 300 according to this exemplary embodiment. The audio processing device 300 includes a directivity formation unit 304, an artificial echo generation unit 305, and an echo suppression unit 306 in addition to the speaker 201 and the microphones 202 and 203.

Among these units, the directivity formation unit 304 includes a delay section 341, an adaptive filter 342, and a subtractor 343.

The delay section 341 delays first audio input signal inputted from the microphone 202.

The adaptive filter 342 inputs second audio input signal inputted from the microphone 203 and generates an artificial echo component corresponding to the echo component mixed in the first audio input signal.

The subtractor 343 subtracts the output of the adaptive filter 342 from the output of the delay section 341.

The artificial echo generation unit 305 includes an adaptive filter 351. The adaptive filter 351 generates an artificial linear echo y(k) estimated to be mixed in first input audio. Here, the first input audio is audio inputted to the microphone 202.

The echo suppression unit 306 includes a subtractor 361 and a non-linear echo suppression section 362. The subtractor 361 suppresses linear echo by using the artificial linear echo y(k). Here, the linear echo is linear echo mixed in the output of the directivity formation unit 304.

The non-linear echo suppression section 362 generates artificial non-linear echo by using the artificial linear echo y(k) generated by the artificial echo generation unit 305. After performing the above-mentioned process, the non-linear echo suppression section 362 suppresses the non-linear echo component in a residual signal d(k) outputted from the subtractor 361 by using the artificial non-linear echo.

By using the above-mentioned configuration, it is possible to form the directivity by using two microphones, attenuate the echo effectively, and leave the near-end audio sufficiently.

«Configuration of non-linear echo suppression section»

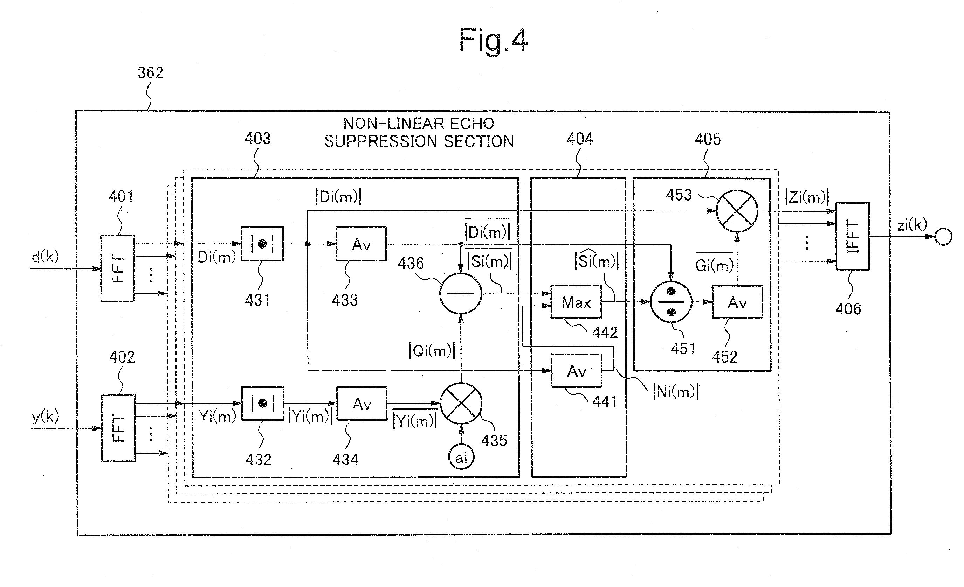

Next, the configuration of the non-linear echo suppression section 362 will be described by using Fig. 4. The non-linear echo suppression section 362 includes a fast Fourier transform (FFT) unit 401, a fast Fourier transform unit 402, a spectral amplitude estimation unit 403, a spectral flooring unit 404, a spectral gain calculation unit 405, and an inverse fast Fourier transform (IFFT) unit 406.

The fast Fourier transform unit 401 and the fast Fourier transform unit 402 convert a residual signal d(k) and the artificial linear echo y(k) into a frequency spectrum, respectively.

The spectral amplitude estimation unit 403, the spectral flooring unit 404, and the spectral gain calculation unit 405 are provided for each frequency component.

The inverse fast Fourier transform unit 406 integrates an amplitude spectrum derived for each frequency component and a corresponding phase, performs an inverse fast Fourier transform, and performs recombination to form an output signal $zi(k)$ in a time domain. Further, namely, the output signal $zi(k)$ in time domain is a signal having an audio waveform that is sent to a communication partner.

A waveform of a linear echo signal is completely different from that of a non-linear echo signal. However, with respect to the spectral amplitude of the linear echo and a spectral amplitude of the non-linear echo for each frequency, there is a tendency in which when the spectral amplitude of the artificial linear echo is large, the spectral amplitude of the non-linear echo is large. Namely, there is a correlation between the amplitude of the linear echo and the amplitude of the non-linear echo. In other words, it is possible to estimate an amount of the non-linear echo based on the artificial linear echo.

Accordingly, the spectral amplitude estimation unit 403 estimates the spectral amplitude of desired audio signal based on the estimated amount of the non-linear echo. The estimated spectral amplitude of the audio signal has an error. Accordingly, the spectral flooring unit 404 performs a flooring process so as not to cause an uncomfortable feeling subjectively by the estimation error in an audio waveform sent to the communication partner.

For example, when the estimated spectral amplitude of the audio signal is excessively small and smaller than spectral amplitude of a background noise, a signal level varies according to a presence or absence of an echo and a feeling of strangeness is brought to the communication partner. As a countermeasure against this, the spectral flooring unit 404 estimates the level of the background noise, uses it as a lower limit of the estimated spectral amplitude, and reduces the level variation.

On the other hand, when the large residual echo remains in the estimated spectral amplitude by the estimation error, the residual echo intermittently and rapidly changes to an artificial additional sound called musical noise. As a countermeasure against this, in order to eliminate the echo, the spectral gain calculation unit 405 does not perform a subtraction of the estimated non-linear echo and performs a multiplication of a gain so as to become subtracted amplitude approximately. By performing a smoothing process to prevent a sudden gain change, it is possible to suppress an intermittent change of the residual echo.

Hereinafter, the internal configuration of the spectral amplitude estimation unit 403, the spectral flooring unit 404, and the spectral gain calculation unit 405 will be described by using a mathematical expression.

The residual signal d(k) inputted to the non-linear echo suppression section 362 is a sum of a near-end signal s(k) and a residual non-linear echo q(k).

$$d(k) = s(k) + q(k) \quad \ldots (1)$$

It is assumed that the linear echo is almost completely eliminated by the adaptive filter 351 and the subtractor 361. On this assumption, only a non-linear component is considered in a frequency domain. By the fast Fourier transform unit 401 and the fast Fourier transform unit 402, the residual signal expressed by equation (1) is converted into a frequency domain and is expressed by the following equation.

$$D(m) = S(m) + Q(m) \quad ... (2)$$

Here, m is a frame number and the vectors D(m), S(m), and Q(m) are expressions of which d(k), s(k), and q(k) are converted into frequency domain, respectively. It is assumed that each frequency is independent. On this assumption, by transforming equation (2), the i-th frequency component of the desired signal is expressed by the following equation.

$$Si(m) = Di(m) - Qi(m) \quad ... (3)$$

Because the adaptive filter 351 and the subtractor 361 remove a correlation, there is hardly a correlation between Di(m) and Yi(m). Accordingly, a subtractor 436 takes a mean square of equation (3) and calculates $\overline{|Si(m)|}^2$ as follows. Further, Yi(m) is an echo replica of the i-th frequency when the artificial linear echo y(k) is converted into the frequency spectrum.

$$\overline{|Si(m)|}^2 = \overline{|Di(m)|}^2 - \overline{|Qi(m)|}^2 \quad \cdots (4)$$

$\overline{|Di(m)|}^2$ is derived from Di(m) by an absolute value obtaining circuit 431 and an averaging circuit 433. On the other hand, the non-linear echo |Qi(m)| can be modeled as a product of a regression coefficient ai and an average echo replica $\overline{|Yi(m)|}$ as follows.

$$|Qi(m)| \fallingdotseq ai \cdot \overline{|Yi(m)|} \quad \cdots (5)$$

Accordingly, an absolute value obtaining circuit 432 and an averaging circuit 434 derive the average echo replica $\overline{|Yi(m)|}$ from Yi(m) and an integration unit 435 multiplies it by the regression coefficient ai. Here, the regression coefficient ai is a regression coefficient indicating a correlation between |Qi(m)| and |Yi(m)|. This model is based on an experimental result showing that there is a significant correlation between |Qi(m)| and |Yi(m)|.

Equation (3) is an additive model that is widely used for a noise suppression. In the spectral shaping performed by the non-linear echo suppression section 362 shown in Fig. 4, in the noise suppression, a spectral multiplication type configuration in which an uncomfortable musical noise is hardly generated is used. By using a spectral multiplication, an amplitude |Zi(m)| of the output signal is obtained as a product of the spectral gain Gi(m) and the residual signal |Di(m)|.

$$|Zi(m)| = \overline{Gi(m)} \cdot |Di(m)| \quad \cdots (6)$$

A square root of equation (6) is taken and $ai^2 * |Yi(m)|^2$ is substituted for $|Qi(m)|^2$ in equation (4). By performing this process, the estimation value $\overline{|Si(m)|}$ of |Si(m)| can be obtained as follows.

$$\overline{|Si(m)|} \fallingdotseq \sqrt{\overline{|Di(m)|}^2 - ai^2 \cdot \overline{|Yi(m)|}^2} \quad \cdots (7)$$

By the way, because the above-mentioned model is not elaborate, the estimated amplitude $\overline{|Si(m)|}$ has a non-negligible error. When the error is large and an over-subtraction occurs, a high-frequency component of the near-end signal decreases or a feeling of modulation occurs in the audio waveform sent to the communication partner. In particular, when the near-end signal is constantly generated like a sound of an air conditioner, the feeling of modulation makes the communication partner uncomfortable. In order to reduce the feeling of modulation subjectively, the flooring on a spectrum is performed by the spectral flooring unit 404.

In the flooring, first, an averaging circuit 441 estimates a stationary component $|Ni(m)|$ of the near-end signal $Di(m)$. Next, a maximum value selection circuit 442 performs the flooring in which the stationary component $|Ni(m)|$ is used as a lower limit. As a result, the maximum value selection circuit 442 outputs a better amplitude estimation vale $|\hat{S}i(m)|$ of the near-end signal. Next, a divider 451 calculates a ratio of $|\hat{S}i(m)|$ to $\overline{|Di(m)|}$. Further, an averaging circuit 452 performs an averaging of the ratio and outputs the spectral gain $Gi(m)$.

Finally, as shown in mathematical expression (5), an integrator 453 calculates the product of the spectral gain $Gi(m)$ and the residual signal $|Di(m)|$. By performing this process, the integrator 453 outputs the calculated product, the amplitude $|Zi(m)|$, as the output signal. The inverse fast Fourier transform unit 406 performs an inverse Fourier transform of the amplitude $|Zi(m)|$ and outputs an audio signal $zi(k)$ in which the non-linear echo is effectively suppressed.

<<Summary of second exemplary embodiment>>

By using this exemplary embodiment, when the above-mentioned configuration is used, it is possible to suppress the linear echo and the non-linear echo very effectively.

The reason is because the audio processing device 300 has the following configuration. First, the delay section 341, the adaptive filter 342, and the subtractor 343 of the directivity formation unit 304 form directivity in which a null point exists in the direction of the speaker 201. Secondly, the adaptive filter 351 of the artificial echo generation unit 305 generates the artificial linear echo $y(k)$ estimated to be mixed in the audio inputted to the microphone 202. thirdly, the subtractor 361 and the non-linear echo suppression section 362 of the echo suppression unit 306 suppress the linear echo mixed in the output from the directivity formation unit 304 by using the artificial linear echo $y(k)$.

(Third exemplary embodiment)

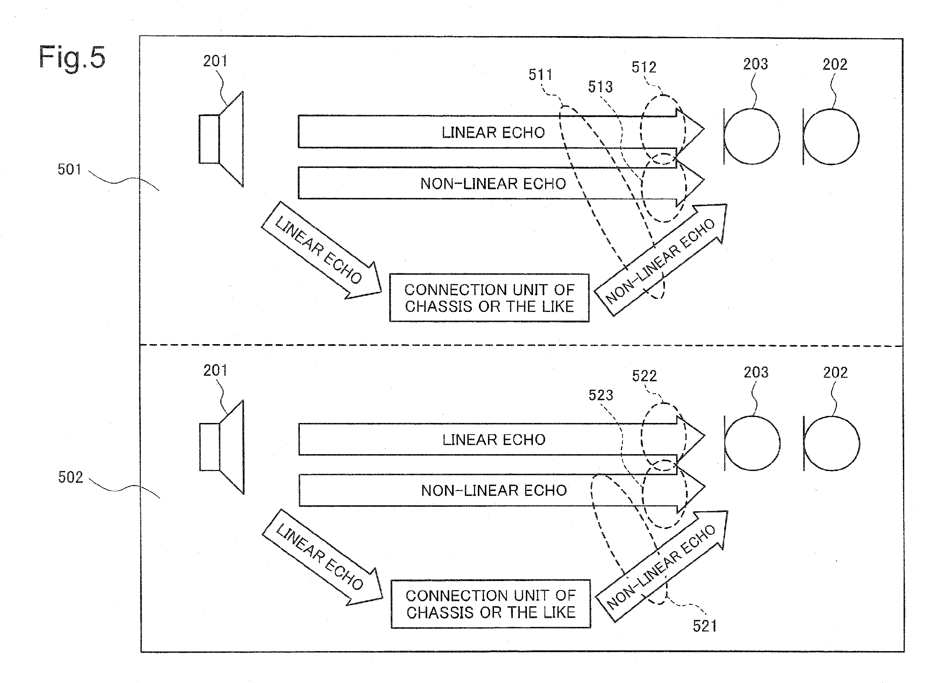

The audio processing device 300 according to the above-mentioned second exemplary embodiment operates as shown in an upper part 501 of Fig. 5. Namely, the directivity formation unit 304 cancels the whole echo (511). The adaptive filter 351 cancels the linear echo (512). Further, the non-linear echo suppression section 362 suppresses the non-linear echo (513).

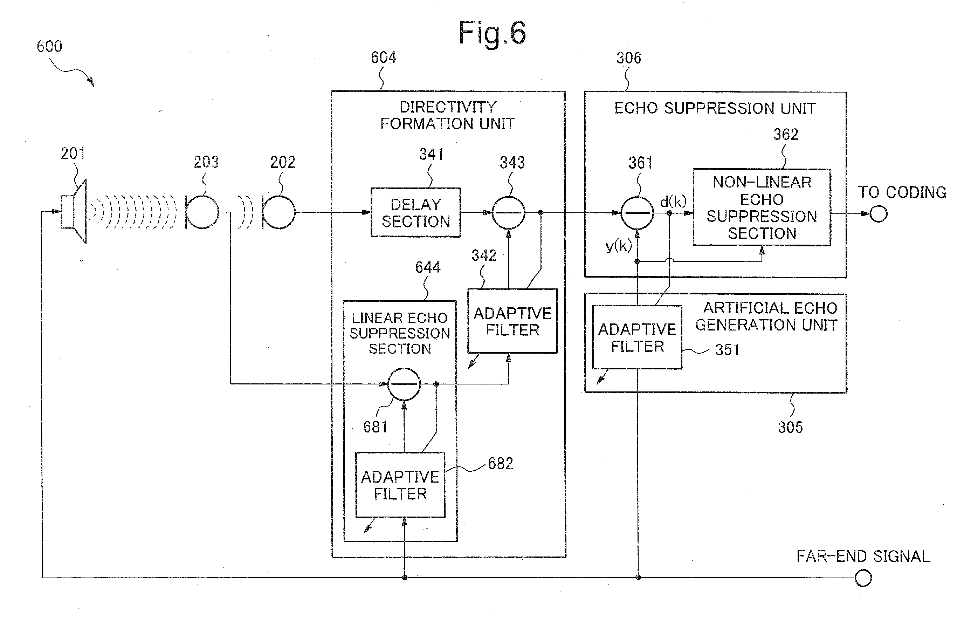

In contrast, an audio processing device 600 of this exemplary embodiment shown in Fig. 6 operates as shown in a lower part 502 of Fig. 5. Namely, a directivity formation unit 604 cancels the non-linear echo mainly (521). The adaptive filter 351 cancels the linear echo (522). Further, the non-linear echo suppression section 362 suppresses the non-linear echo (523).

The specific configuration will be described by using Fig. 6. The third exemplary embodiment includes the directivity formation unit 604 including a linear echo suppression section 644 instead of the directivity formation unit 304 used for the second exemplary embodiment. The configuration and the operation other than the above-mentioned are the same as those of the second exemplary embodiment. Therefore, the same reference numbers are used for the components having the same configuration and the same operations and the detailed explanation of these components and operations is omitted.

The directivity formation unit 604 includes the linear echo suppression section 644 which suppresses the linear echo component of the audio input signal from the microphone 203. The linear echo suppression section 644 includes an adaptive filter 682 which generates artificial linear echo from a far-end signal and a subtractor 681 which subtracts the artificial linear echo from the audio input signal outputted from the microphone 203. Namely, the directivity formation unit 644 suppresses the linear echo component of the audio input signal outputted from the microphone 203 and outputs a non-linear echo component extracted in this way as a suppressed audio input signal.

The adaptive filter 342 generates the artificial echo by using the suppressed audio input signal outputted from the linear echo suppression section 644.

The subtractor 343 subtracts the artificial echo from a delay signal obtained by delaying the audio input signal outputted from the microphone 202 by the delay section 341. The subtractor 343 makes the directivity formation unit 604 form directivity in which sensitivity in the direction of the speaker 201 is low. In other words, the subtractor 343 makes the directivity formation unit 604 form directivity in which a null point exists in the direction of the speaker 201.

By using this exemplary embodiment, when the above-mentioned configuration is used, it is possible to suppress the linear echo and the non-linear echo more effectively than the second exemplary embodiment.

The reason is because the audio processing device 600 has the following configuration. First, the directivity formation unit 304 cancels the non-linear echo mainly. Secondly, the adaptive filter 351 cancels the linear echo. Thirdly, the non-linear echo suppression section 362 suppresses the non-linear echo.

(Fourth exemplary embodiment)

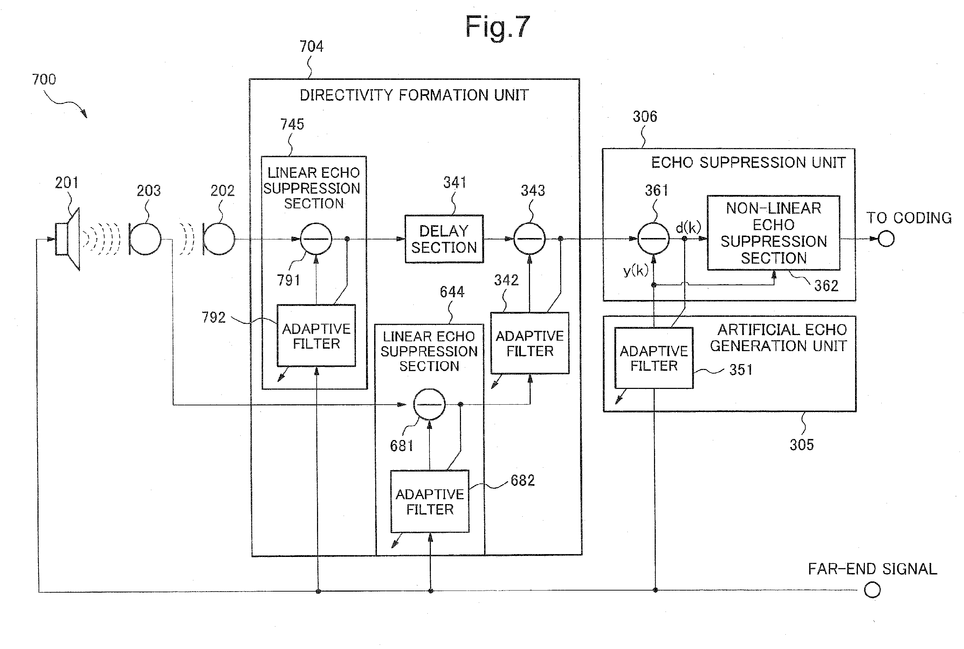

Next, an audio processing device 700 according to a fourth exemplary embodiment of the present invention will be described by using Fig. 7.

The audio processing device 700 according to the fourth exemplary embodiment includes a directivity formation unit 704 instead of the directivity formation unit 604 used for the third exemplary embodiment mentioned above. The configuration and the operation other than the above-mentioned are the same as those of the third exemplary embodiment. Therefore, the same reference numbers are used for the components having the same configuration and the same operations and the detailed explanation of these components and operations is omitted.

The directivity formation unit 704 includes a linear echo suppression section 745 which suppresses the linear echo component of the audio input signal outputted from the microphone 202 in addition to the configuration of the directivity formation unit 604.

The linear echo suppression section 745 includes an adaptive filter 792 which generates the artificial linear echo from the far-end signal and a subtractor 791 which subtracts the artificial linear echo from the audio input signal outputted from the microphone 202.

The adaptive filter 342 generates the artificial echo by using the suppressed audio input signal outputted from the linear echo suppression section 644. The linear echo suppression section 745 suppresses the linear echo component of the audio input signal outputted from the microphone 202. After performing this process, the delay section 341 delays the audio input signal in which the linear echo component is suppressed to generate the delay signal.

The subtractor 343 subtracts the artificial echo from the delay signal obtained by delaying the audio input signal outputted from the microphone 202 by the delay section 341. The subtractor 343 makes the directivity formation unit 704 form directivity in which sensitivity in the direction of the speaker 201 is low. In other words, the subtractor 343 makes the directivity formation unit 704 form directivity in which a null point exists in the direction of the speaker 201.

By using this exemplary embodiment, when the above-mentioned configuration is used, it is possible to suppress the linear echo and the non-linear echo effectively.

The reason is because the audio processing device 700 further includes the linear echo suppression section 745 which suppresses the linear echo component of the audio input signal outputted from the microphone 202.

(Fifth exemplary embodiment)

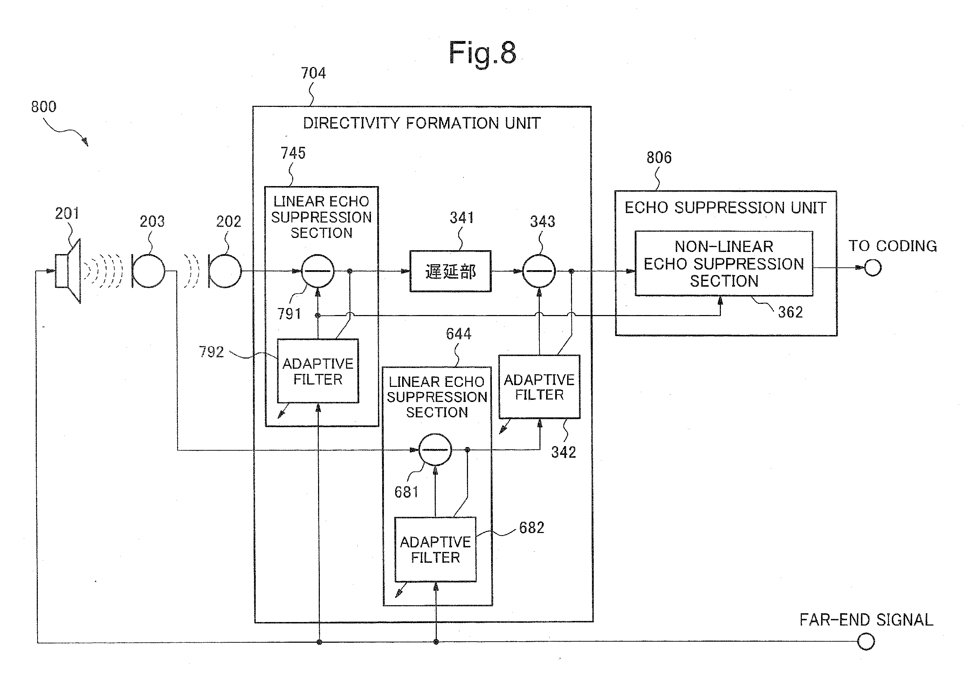

Next, an audio processing device 800 according to a fifth exemplary embodiment of the present invention will be described by using Fig. 8.

The audio processing device 800 according to the fifth exemplary embodiment does not include the artificial echo generation unit 305 although the audio processing device 700 according to the fourth exemplary embodiment includes it. The configuration and the operation other than the above-mentioned are the same as those of the fourth exemplary embodiment. Therefore, the same reference numbers are used for the components having the same configuration and the same operations and the detailed explanation of these components and operations is omitted.

The configuration of the non-linear echo suppression section 362 included in an echo suppression unit 806 is completely the same as one explained by using Fig. 4. However, using an output from the adaptive filter 792 instead of the artificial echo y(k) as the input signal is a difference.

In other words, the linear echo suppression section 745 suppresses the linear echo component of the first audio input signal by using the artificial echo derived from the far-end signal. The echo suppression unit 806 performs an echo suppression process by using the artificial echo derived in the linear echo suppression section 745.

By using this exemplary embodiment, it is possible to achieve the echo suppression similar to the echo suppression performed in the fourth exemplary embodiment by using a simple configuration.

The reason is because the non-linear echo suppression section 362 uses the output from the adaptive filter 792 instead of the artificial echo y(k) as the input signal.

(Sixth exemplary embodiment)

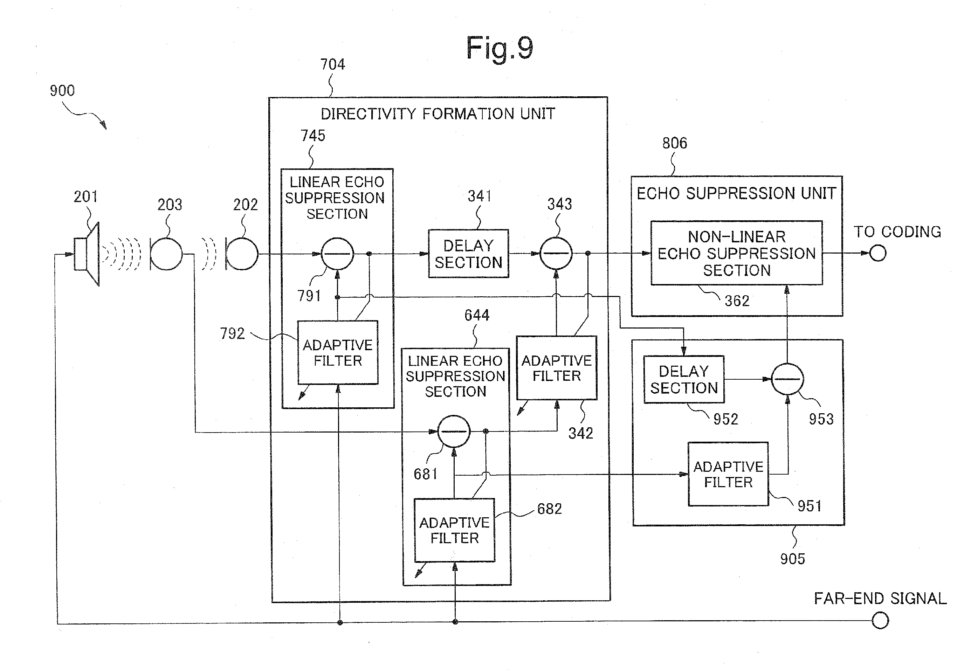

Next, an audio processing device 900 according to a sixth exemplary embodiment of the present invention will be described by using Fig. 9.

The audio processing device 900 according to the sixth exemplary embodiment includes an artificial echo generation unit 905 although the audio processing device 800 according to the fifth exemplary embodiment does not include it. The configuration and the operation other than the above-mentioned are the same as those of the fifth exemplary embodiment. Therefore, the same reference numbers are used for the components having the same configuration and the same operations and the detailed explanation of these components and operations is omitted.

The configuration of the non-linear echo suppression section 362 included in the echo suppression unit 806 is completely the same as one explained by using Fig. 4. However, the non-linear echo suppression section 362 uses the output from the artificial echo generation unit 905 instead of the artificial echo y(k) as the input signal.

The artificial echo generation unit 905 delays the artificial linear echo obtained by the adaptive filter 792 by using a delay section 952. Further, the artificial linear echo obtained by the adaptive filter 682 passes through an adaptive filter 951 of the artificial echo generation unit 905. A subtractor 953 of the artificial echo generation unit 905 subtracts the output of the adaptive filter 951 from the output of the delay section 952. The artificial echo generation unit 905 derives new artificial echo by this process.

The linear echo suppression section 644 and the linear echo suppression section 745 suppress the linear echo components of the audio input signal outputted from the microphone 202 and the linear echo component of the audio input signal outputted from the microphone 203 by using the artificial echo derived from the far-end signal, respectively.

The echo suppression unit 806 performs the echo suppression process by using the new artificial echo obtained by combining the artificial echoes derived by the linear echo suppression sections 644 and 745. By using this exemplary embodiment, it is possible to achieve the echo suppression similar to the echo suppression performed in the fourth exemplary embodiment.

The reason is because the audio processing device 900 has the following configuration. First, the subtractor 953 of the artificial echo generation unit 905 subtracts the artificial linear echo that is obtained by the adaptive filter 682 and passes through the adaptive filter 951 from the artificial linear echo that is obtained by the adaptive filter 792 and delayed. Secondly, the non-linear echo suppression section 362 included in the echo suppression unit 806 uses the output from the artificial echo generation unit 905 instead of the artificial echo y(k) as the input signal.

(Seventh exemplary embodiment)

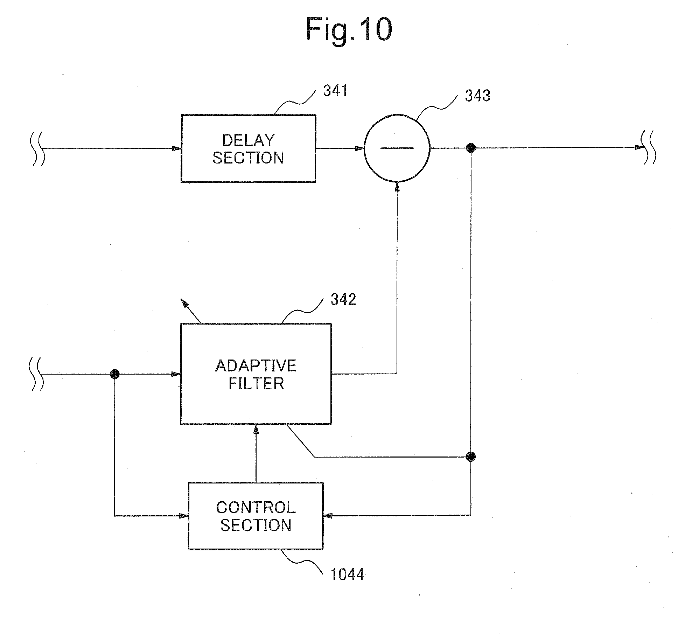

In the above-mentioned second to sixth exemplary embodiments, as shown in Fig. 10, the directivity formation units 304, 604, and 704 may further include a control section 1044 which controls the adaptive filter 342 according to the output of the subtractor 343 and the input to the adaptive filter 342.

When an input level to the adaptive filter 342 is large and an output level of the subtractor 343 is small, the control section 1044 updates a coefficient of the adaptive filter 342. Further, when the input level to the adaptive filter 342 is small, the coefficient of the adaptive filter 342 is not updated.

Thus, the directivity can be effectively formed by controlling the update of the coefficient of the adaptive filter.

The reason is because the following configuration is used. First, the control section 1044 which updates the coefficient of the adaptive filter 342 detects a case in which the appropriate directivity is formed by updating the coefficient of the adaptive filter 342, in other words, a case in which the input level to the adaptive filter 342 is large and the output level of the subtractor 343 is small. Secondly, only in that case, the control section 1044 updates the coefficient of the adaptive filter.

(Eighth exemplary embodiment)

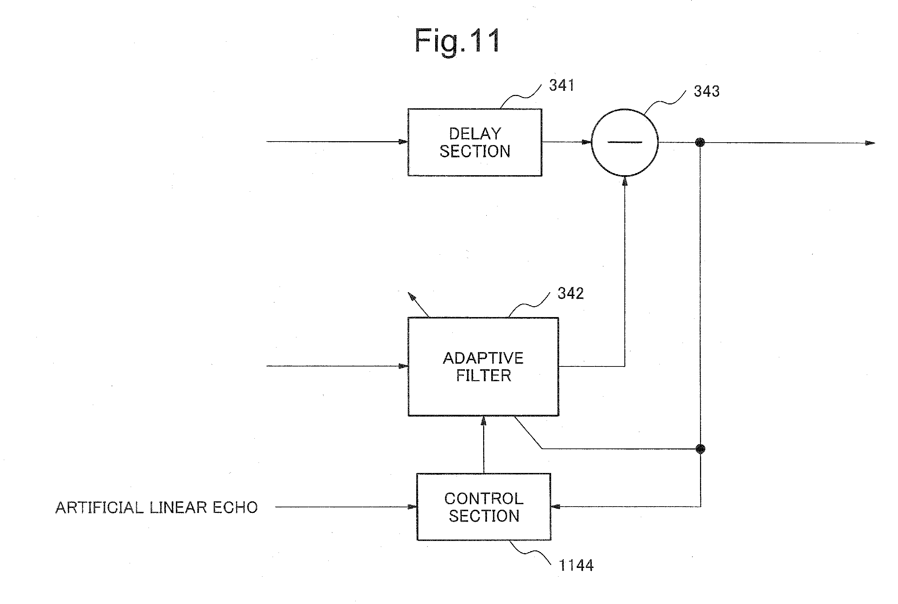

In the above-mentioned second to sixth exemplary embodiments, as shown in Fig. 11, the directivity formation units 304, 604, and 704 may further include a control section 1144 which controls the adaptive filter 342 according to the output of the subtractor 343 and the artificial linear echo.

When the level of the artificial linear echo is large and the output level of the subtractor 343 is small, the control section 1144 updates the coefficient of the adaptive filter 342. Further, when the level of the artificial linear echo is small, the control section 1144 does not update the coefficient of the adaptive filter 342.

Thus, it is possible to form the directivity further effectively by controlling the update of the coefficient of the adaptive filter.

The reason is because the following configuration is used. First, the control section 1044 which updates the coefficient of the adaptive filter 342 detects a case in which the appropriate directivity is formed by updating the coefficient of the adaptive filter, in other words, a case in which the level of the artificial linear echo is large and the output level of the subtractor 343 is small. Secondly, only in that case, the control section 1044 updates the coefficient of the adaptive filter.

(Ninth exemplary embodiment)

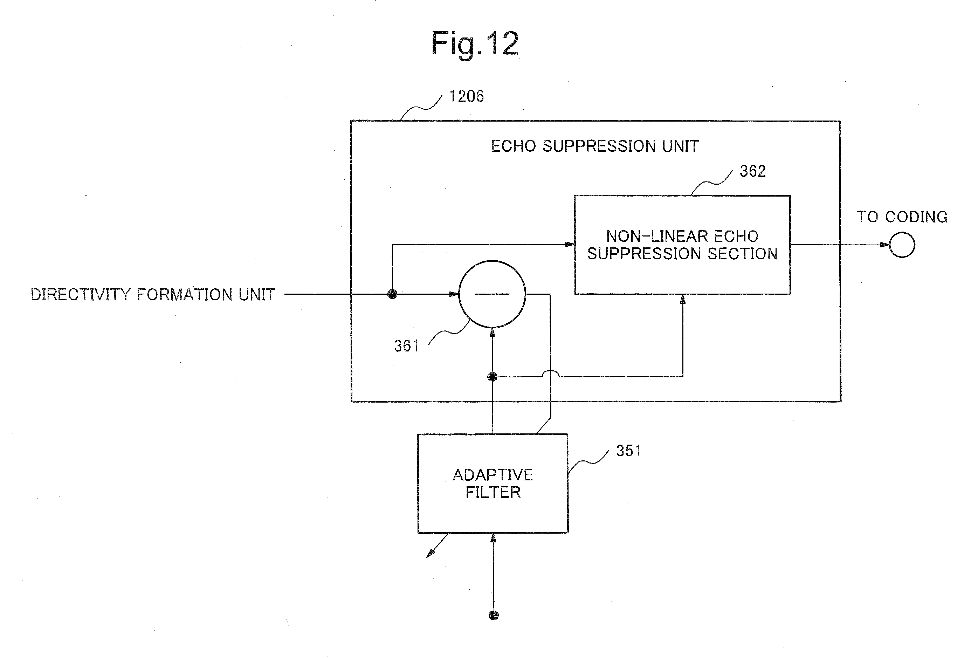

In the above-mentioned second to sixth exemplary embodiments, an echo suppression unit 1206 shown in Fig. 12 may be used instead of the echo suppression unit 306. In the echo suppression unit 1206, a signal after subtraction performed by a subtractor 361 is not inputted to the non-linear echo suppression section 362 and a signal before subtraction is inputted to the non-linear echo suppression section 362.

The subtractor 361 in the echo suppression unit 1206 cancels the linear echo mixed in the output from the directivity formation units 304, 604, and 704 by using the artificial linear echo generated by the adaptive filter 351.

Further, the non-linear echo suppression section 362 in the echo suppression unit 1206 generates an artificial non-linear echo by using the artificial linear echo. After performing this process, the non-linear echo suppression section 362 suppresses the linear echo together with the non-linear echo mixed in the output from the directivity formation units 304, 604, and 704 by using the artificial non-linear echo.

By using this exemplary embodiment, it is possible to suppress the non-linear echo like the above-mentioned second to sixth exemplary embodiments.

The reason is because each audio processing device further includes the echo suppression unit 1206 in which the signal before subtraction instead of the signal after subtraction performed by the subtractor 361 is inputted to the non-linear echo suppression section 362.

(Another exemplary embodiment)

The exemplary embodiment of the present invention has been described in detail above. However, a system or a device in which the different features included in the respective exemplary embodiments are arbitrarily combined is also included in the scope of the present invention.

Further, the present invention may be applied to a system composed of a plurality of devices and it may be applied to a stand-alone device. Furthermore, the present invention can be applied to a case in which an information processing program which realizes the function of the exemplary embodiment is directly or remotely supplied to the system or the device.

Accordingly, a program installed in a computer to realize the function of the present invention by the computer, a medium storing the program, and a WWW (World Wide Web) server which downloads the program are also included in the scope of the present invention.

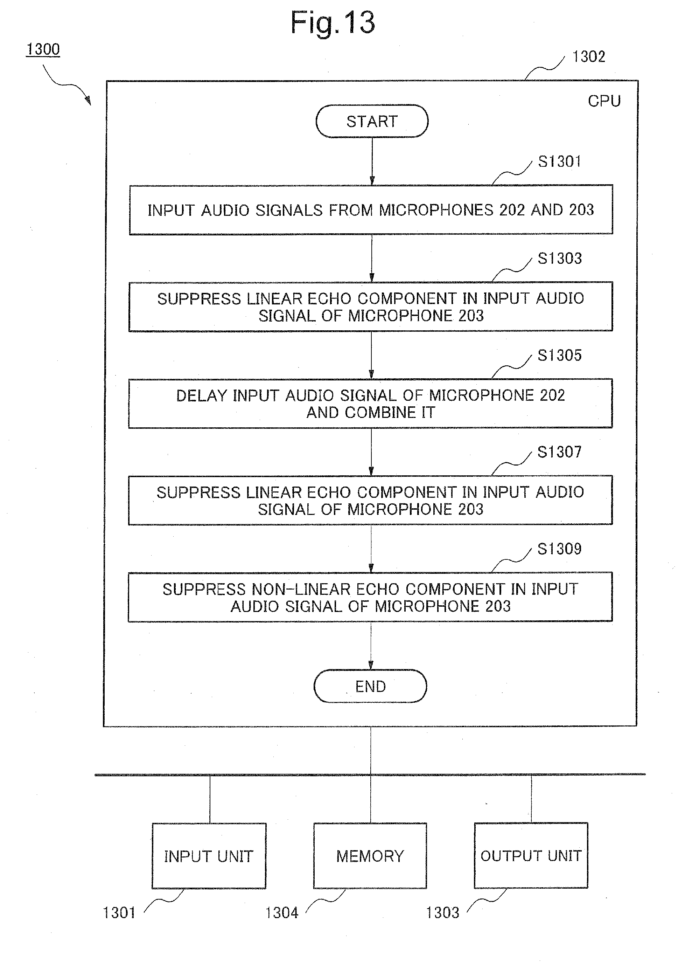

Hereinafter, as an example, in a case in which the audio process described in the third exemplary embodiment is realized by software, a flow of the process executed by a CPU (Central Processing Unit) 1302 provided in a computer 1300 will be described by using Fig. 13.

First, the CPU 1302 inputs the audio signals from the microphones 202 and 203 by using the input unit 1301 and stores them in a memory 1304 (S1301). Next, the linear echo component in the audio input signal of the microphone 203 is suppressed (S1303).

Further, the CPU 1302 delays the audio input signal of the microphone 202 and combines it and the result of the process performed in step S1303 (S1305). The directivity obtained by using two microphones is formed by the processes of steps S1303 and S1305.

Further, the CPU 1302 suppresses the linear echo component in the audio input signal of the microphone 203 (S1307). Finally, the CPU 1302 suppresses the non-linear echo component in the audio input signal of the microphone 203 (S1309).

By performing the above mentioned processes, it is possible to obtain an effect that is the same as that of the third exemplary embodiment.

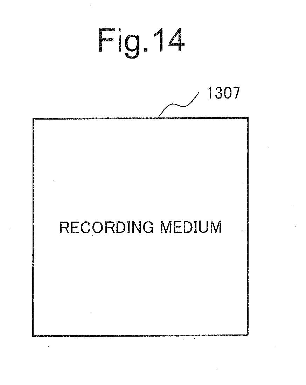

Fig. 14 is a figure showing an example of a recording medium (storage medium) 1307 which records (stores) the program. The recording medium 1307 is a non-volatile recording medium that is a non-transitory storage medium for storing information. Further, the recording medium 1307 may be a recording medium that is a temporary storage medium for storing information. The recording medium 1307 records the program (software) which causes the computer 1300 (CPU 1302) to perform the operation shown in Fig. 13. Further, the recording medium 1307 may record an arbitrary program and data.

The recording medium 1307 recording a code of the above-mentioned program (software) is supplied to the computer 1300 and the CPU 1302 may read out the code of the program stored in the recording medium 1307 and execute it. Further, the CPU 1302 may store the code of the program stored in the recording medium 1307 in the memory 1304. Namely, this exemplary embodiment includes an exemplary embodiment of the recording medium 1307 that is a temporary storage medium or a non-temporary storage medium for storing the program executed by the computer 1300 (CPU 1302).

Although the invention of the present application has been described above by referring to the exemplary embodiment, the invention of the present application is not limited to the above-mentioned exemplary embodiment. Various changes in the configuration or details of the invention of the present application that can be understood by those skilled in the art can be made in the scope of the invention.

This application claims priority from Japanese Patent Application No. 2011-112076 filed on May 19, 2011, the disclosure of which is hereby incorporated by reference in its entirety.

DESCRIPTION OF THE REFERENCE NUMERALS

| | |
|---|---|
| 100 | audio processing device |
| 101 | audio output unit |
| 102 | first audio input unit |
| 103 | second audio input unit |
| 104 | directivity formation unit |
| 105 | artificial echo generation unit |
| 106 | echo suppression unit |
| 201 | speaker |
| 202 | microphone |
| 203 | microphone |
| 210 | portable phone |
| 230 | user |
| 240 | near-end audio |
| 304 | directivity formation unit |
| 305 | artificial echo generation unit |
| 306 | echo suppression unit |
| 341 | delay section |
| 342 | adaptive filter |
| 343 | subtractor |
| 351 | adaptive filter |
| 361 | subtractor |
| 362 | non-linear echo suppression section |
| 401 | fast Fourier transform unit |
| 402 | fast Fourier transform unit |
| 403 | spectral amplitude estimation unit |
| 404 | spectral flooring unit |
| 405 | spectral gain calculation unit |
| 406 | inverse fast Fourier transform unit |
| 431 | absolute value obtaining circuit |
| 432 | absolute value obtaining circuit |
| 433 | averaging circuit |
| 434 | averaging circuit |
| 435 | integration unit |
| 436 | subtractor |
| 441 | averaging circuit |
| 442 | maximum value selection circuit |
| 451 | divider |
| 452 | averaging circuit |
| 453 | integrator |
| 501 | upper part |
| 502 | lower part |
| 600 | audio processing device |
| 604 | directivity formation unit |
| 644 | linear echo suppression section |
| 681 | subtractor |
| 682 | adaptive filter |
| 700 | audio processing device |
| 704 | directivity formation unit |
| 745 | linear echo suppression section |
| 791 | subtractor |
| 792 | adaptive filter |
| 800 | audio processing device |
| 806 | echo suppression unit |
| 900 | audio processing device |

| 905 | artificial echo generation unit |
|---|---|
| 951 | adaptive filter |
| 953 | subtractor |
| 1044 | control section |
| 1144 | control section |
| 1206 | echo suppression unit |
| 1300 | computer |
| 1301 | input unit |
| 1302 | CPU |
| 1304 | memory |
| 1307 | recording medium |

**Claims**

1. An audio processing device comprising:

   audio output means for outputting audio based on an audio output signal;
   first audio input means for inputting audio;
   second audio input means for inputting audio that are disposed in a position closer to the audio output means than the first audio input means;
   directivity formation means for combining a first audio input signal outputted from the first audio input means and a second audio input signal from the second audio input means so as to form directivity in which sensitivity in a direction of the audio output means is low when viewed from the first audio input means and the second audio input means, and outputting a combined signal;
   artificial echo generation means for generating artificial echo corresponding to an echo component mixed in the audio that is inputted to the first audio input means from the audio output means; and
   echo suppression means for performing an echo suppression process to the combined signal outputted from the directivity formation means by using the artificial echo derived from the audio output signal.

2. The audio processing device according to claim 1,
   wherein the audio processing device is installed in a portable phone, the audio output means are a speaker for hands-free voice communication, and the first and second audio input means are microphones.

3. The audio processing device according to claim 1 or claim 2,
   wherein the directivity formation means includes:

   a delay unit which delays the first audio input signal;
   an adaptive filter which generates an artificial echo component corresponding to an echo component mixed in the first audio input signal from the second audio input signal; and
   a subtractor which subtracts an output of the adaptive filter from an output of the delay unit.

4. The audio processing device according to any one of claims 1 to 3,
   wherein the directivity formation means further includes control means for controlling the adaptive filter according to an output of the subtractor and an input to the adaptive filter.

5. The audio processing device according to any one of claims 1 to 3,
   wherein the directivity formation means further includes control means for controlling the adaptive filter according to an output of the subtractor and the artificial echo component.

6. The audio processing device according to any one of claims 1 to 5,
   wherein the artificial echo generation means includes an adaptive filter which generates an artificial linear echo estimated to be mixed in the audio inputted to the first audio input means.

7. The audio processing device according to claim 6,
   wherein the echo suppression means includes:

   linear echo suppression means for suppressing linear echo mixed in the output from the directivity formation means by using the artificial linear echo; and

non-linear echo suppression means for suppressing non-linear echo included in the output from the linear echo suppression means by generating artificial non-linear echo by using the artificial linear echo and using the artificial non-linear echo.

**8.** The audio processing device according to claim 6,
wherein the echo suppression means includes:

linear echo suppression means for suppressing linear echo mixed in the output from the directivity formation means by using the artificial linear echo; and

non-linear echo suppression means for suppressing non-linear echo mixed in the output from the directivity formation means by generating artificial non-linear echo by using the artificial linear echo and using the artificial non-linear echo.

**9.** The audio processing device according to any one of claims 1 to 8,
wherein the directivity formation means includes second linear echo suppression means for suppressing a linear echo component of the second audio input signal, combines a suppressed second audio input signal outputted from the second linear echo suppression means and a delay signal obtained by delaying the first audio input signal, and forms directivity in which sensitivity in the direction of the audio output means is low when viewed from the first audio input means and the second audio input means.

**10.** The audio processing device according to claim 9,
wherein the directivity formation means further includes first linear echo suppression means for suppressing a linear echo component of the first audio input signal, combines the second audio input signal outputted from the second linear echo suppression means and a delay signal obtained by delaying a suppressed first audio input signal outputted from the first linear echo suppression means, and forms directivity in which sensitivity in the direction of the audio output means is low when viewed from the first audio input means and the second audio input means.

**11.** The audio processing device according to claim 10,
wherein the first linear echo suppression means suppresses the linear echo component of the first audio input signal by using the artificial echo derived from the audio output signal and the echo suppression means perform an echo suppression process by using the artificial echo derived by the first linear echo suppression means.

**12.** The audio processing device according to claim 11,
wherein the first linear echo suppression means and the second linear echo suppression means suppress the linear echo component of the first audio input signal and the linear echo component of the second audio input signal by using the artificial echo derived from the audio output signal and the echo suppression means perform the echo suppression process by using the artificial echoes derived by the first and second linear echo suppression means.

**13.** An audio processing method comprising the steps of:

combining a first audio input signal outputted from first audio input means and a second audio input signal from second audio input means so as to form directivity in which sensitivity in a direction of audio output means is low when viewed from the first audio input means for inputting audio and the second audio input means for inputting audio that are disposed in a position closer to the audio output means for outputting the audio based on an audio output signal than the first audio input means, and outputting a combined signal;

generating artificial echo corresponding to an echo component mixed in the audio inputted to the first audio input means from the audio output means from the audio output signal; and

performing an echo suppression process to the combined signal by using the artificial echo derived from the audio output signal.

**14.** A non-volatile medium recording an audio processing program causing a computer to perform:

a process in which a first audio input signal outputted from first audio input means and a second audio input signal from second audio input means are combined so as to form directivity in which sensitivity in a direction of audio output means is low when viewed from the first audio input means for inputting audio and the second audio input means that are disposed in a position closer means to the audio output means for outputting the audio based on an audio output signal than the first audio input, and a combined signal is outputted;

a process in which artificial echo corresponding to an echo component mixed in the audio inputted to the first audio input means from the audio output means is generated from the audio output signal; and

a process in which an echo suppression process is performed to the combined signal by using the artificial echo derived from the audio output signal.

**Amended claims under Art. 19.1 PCT**

**1.** An audio processing device comprising:

audio output means for outputting audio based on an output audio signal;

first audio input means for inputting audio;

second audio input means for inputting audio that are more closely disposed than the first audio input means to the audio output means;

directionality formation means for combining a first input audio signal outputted from the first audio input means and a second input audio signal from the second audio input means and outputting the combined signal so as to form directionality in which sensitivity in a direction of the audio output means is low when viewed from the first audio input means and the second audio input means and outputting the combined signal;

artificial echo generation means for generating artificial echo corresponding to an echo component mixed in the audio that is inputted to the first audio input means from the audio output means; and

echo suppression means for performing an echo suppression process to the combined signal outputted from the directionality formation means by using the artificial echo derived from the output audio signal.

**2.** The audio processing device according to claim 1,

wherein the audio processing device is installed in a portable phone, the audio output means are a speaker for hands-free voice communication, and the first and second audio input means are microphones.

**3.** The audio processing device according to claim 1 or claim 2,

wherein the directionality formation means includes:

a delay unit which delays the first input audio signal;

an adaptive filter which generates an artificial echo component corresponding to an echo component mixed in the first input audio signal from the second input audio signal; and

a subtractor which subtracts an output of the adaptive filter from an output of the delay unit.

**4.** (Amended) The audio processing device according to claim 1,

wherein the directionality formation means further includes control means for controlling the adaptive filter according to an output of the subtractor and an input to the adaptive filter.

**5.** (Amended) The audio processing device according to claim 1,

wherein the directionality formation means further includes control means for controlling the adaptive filter according to an output of the subtractor and the artificial echo component.

**6.** The audio processing device according to any one of claims 1 to 5,

wherein the artificial echo generation means includes an adaptive filter which generates an artificial linear echo estimated to be mixed in the audio inputted to the first audio input means.

**7.** The audio processing device according to claim 6,

wherein the echo suppression means includes:

linear echo suppression means for suppressing linear echo mixed in the output from the directionality formation means by using the artificial linear echo; and

non-linear echo suppression means for suppressing non-linear echo included in the output from the linear echo suppression means by generating artificial non-linear echo by using the artificial linear echo and using the artificial non-linear echo.

**8.** The audio processing device according to claim 6,

wherein the echo suppression means includes:

linear echo suppression means for suppressing linear echo mixed in the output from the directionality formation means by using the artificial linear echo; and

non-linear echo suppression means for suppressing non-linear echo mixed in the output from the directionality formation means by generating artificial non-linear echo by using the artificial linear echo and using the artificial non-linear echo.

**9.** The audio processing device according to any one of claims 1 to 8,
wherein the directionality formation means includes second linear echo suppression means for suppressing a linear echo component of the second input audio signal, combines a suppressed second input audio signal outputted from the second linear echo suppression means and a delay signal obtained by delaying the first input audio signal, and forms directionality in which sensitivity in the direction of the audio output means is low when viewed from the first audio input means and the second audio input means.

**10.** The audio processing device according to claim 9,
wherein the directionality formation means further includes first linear echo suppression means for suppressing a linear echo component of the first input audio signal, combines the second input audio signal outputted from the second linear echo suppression means and a delay signal obtained by delaying a suppressed first input audio signal outputted from the first linear echo suppression means, and forms directionality in which sensitivity in the direction of the audio output means is low when viewed from the first audio input means and the second audio input means.

**11.** The audio processing device according to claim 10,
wherein the first linear echo suppression means suppresses the linear echo component of the first input audio signal by using the artificial echo derived from the output audio signal and the echo suppression means perform an echo suppression process by using the artificial echo derived by the first linear echo suppression means.

**12.** The audio processing device according to claim 11,
wherein the first linear echo suppression means and the second linear echo suppression means suppress the linear echo component of the first input audio signal and the linear echo component of the second input audio signal by using the artificial echo derived from the output audio signal and the echo suppression means perform the echo suppression process by using the artificial echoes derived by the first and second linear echo suppression means.

**13.** An audio processing method comprising the steps of:

combining a first input audio signal outputted from first audio input means and a second input audio signal from second audio input means so as to form directionality in which sensitivity in a direction of audio output means is low when viewed from the first audio input means for inputting audio and the second audio input means for inputting audio that are more closely disposed than the first audio input means to the audio output means for outputting the audio based on an output audio signal and outputting a combined signal;

generating artificial echo corresponding to an echo component mixed in the audio inputted to the first audio input means from the audio output means from the output audio signal; and

performing an echo suppression process to the combined signal by using the artificial echo derived from the output audio signal.

**14.** A non-volatile medium recording an audio processing program causing a computer to perform:

a process in which a first input audio signal outputted from first audio input means and a second input audio signal from second audio input means are combined so as to form directionality in which sensitivity in a direction of audio output means is low when viewed from the first audio input means for inputting audio and the second audio input means that are more closely disposed than the first audio input means to the audio output means for outputting the audio based on an output audio signal and a combined signal is outputted;

a process in which artificial echo corresponding to an echo component mixed in the audio inputted to the first audio input means from the audio output means is generated from the output audio signal; and

a process in which an echo suppression process is performed to the combined signal by using the artificial echo derived from the output audio signal.

**Statement under Art. 19.1 PCT**

In application original claims 4 and 5, indistinct mentions by the error in writing (mistaking claims to refer) have been corrected to become clear.

# Fig.1

# Fig.2

## Fig.3

EP 2 712 208 A1

Fig.4

EP 2 712 208 A1

Fig.5

501

201

511    513    512    203    202

LINEAR ECHO

NON-LINEAR ECHO

LINEAR ECHO

CONNECTION UNIT OF
CHASSIS OR THE LIKE

NON-LINEAR ECHO

502

201

522    203    202

523

LINEAR ECHO

NON-LINEAR ECHO

LINEAR ECHO

CONNECTION UNIT OF
CHASSIS OR THE LIKE

NON-LINEAR ECHO

521

EP 2 712 208 A1

Fig.6

## Fig.7

EP 2 712 208 A1

# Fig.8

# Fig.9

# Fig.10

EP 2 712 208 A1

# Fig.11

# Fig.12

EP 2 712 208 A1

# Fig.13

1300

1302

CPU

```
                    ( START )
                        │
                        ▼                              S1301
┌─────────────────────────────────────────────────────┐
│  INPUT AUDIO SIGNALS FROM MICROPHONES 202 AND 203     │
└─────────────────────────────────────────────────────┘
                        │
                        ▼                              S1303
┌─────────────────────────────────────────────────────┐
│  SUPPRESS LINEAR ECHO COMPONENT IN INPUT AUDIO        │
│  SIGNAL OF MICROPHONE 203                             │
└─────────────────────────────────────────────────────┘
                        │
                        ▼                              S1305
┌─────────────────────────────────────────────────────┐
│  DELAY INPUT AUDIO SIGNAL OF MICROPHONE 202           │
│  AND COMBINE IT                                       │
└─────────────────────────────────────────────────────┘
                        │
                        ▼                              S1307
┌─────────────────────────────────────────────────────┐
│  SUPPRESS LINEAR ECHO COMPONENT IN INPUT AUDIO        │
│  SIGNAL OF MICROPHONE 203                             │
└─────────────────────────────────────────────────────┘
                        │
                        ▼                              S1309
┌─────────────────────────────────────────────────────┐
│  SUPPRESS NON-LINEAR ECHO COMPONENT IN INPUT          │
│  AUDIO SIGNAL OF MICROPHONE 203                       │
└─────────────────────────────────────────────────────┘
                        │
                        ▼
                    ( END )
```

INPUT UNIT

MEMORY

OUTPUT UNIT

1301

1304

1303

# Fig.14

1307

RECORDING MEDIUM

**INTERNATIONAL SEARCH REPORT**

| International application No. |
| --- |
| PCT/JP2012/063399 |

A.  CLASSIFICATION OF SUBJECT MATTER
*H04R3/02*(2006.01)i, *H04B3/23*(2006.01)i, *H04M1/60*(2006.01)i, *H04R1/40*
(2006.01)i, *H04R3/00*(2006.01)i

According to International Patent Classification (IPC) or to both national classification and IPC

B.  FIELDS SEARCHED

Minimum documentation searched (classification system followed by classification symbols)
H04R3/02, H04B3/23, H04M1/60, H04R1/40, H04R3/00

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y<br><br>A | JP 6-152724 A  (Sony Corp.),<br>31 May 1994 (31.05.1994),<br>paragraphs [0009] to [0032]; fig. 1 to 6<br>(Family: none) | 1-4,6-10,13,<br>14<br>5,11,12 |
| Y<br><br>A | WO 2009/051197 A1  (NEC Corp.),<br>23 April 2009 (23.04.2009),<br>paragraphs [0016] to [0019], [0023] to [0031];<br>fig. 1 to 4<br>& US 2010/0208908 A1 | 1-4,6-10,13,<br>14<br>5,11,12 |
| Y | JP 2008-263441 A  (Matsushita Electric<br>Industrial Co., Ltd.),<br>30 October 2008 (30.10.2008),<br>entire text; all drawings<br>(Family: none) | 9,10 |

☐  Further documents are listed in the continuation of Box C.      ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 28 June, 2012 (28.06.12) | 10 July, 2012 (10.07.12) |

| Name and mailing address of the ISA/<br>    Japanese Patent Office | Authorized officer |
| --- | --- |
| Facsimile No. | Telephone No. |

Form PCT/ISA/210 (second sheet) (July 2009)

**REFERENCES CITED IN THE DESCRIPTION**

**Patent documents cited in the description**

- WO 09051197 A

- JP 2011112076 A